# EUROPÄISCHE PATENTSCHRIFT

(11) **EP 2 892 763 B1**
(45) Veröffentlichungstag und Bekanntmachung des Hinweises auf die Patenterteilung: **08.06.2016**
(21) Anmeldenummer: 13750720.8
(22) Anmeldetag: 22.08.2013
(51) Int. Cl.: B60R 21/00, B60R 21/205

(54) **KRAFTFAHRZEUG MIT EINEM AIRBAGMODUL**
MOTOR VEHICLE WITH AN AIRBAG MODULE
VÉHICULE AUTOMOBILE AVEC UN MODULE D'AIRBAG

(30) Priorität: 06.09.2012 DE 102012215853
(43) Veröffentlichungstag der Anmeldung: 15.07.2015
(73) Patentinhaber: Bayerische Motoren Werke Aktiengesellschaft, 80809 München (DE)
(72) Erfinder: EIGENMANN, Martin, 84032 Landshut (DE); HUYNH, Dienhung, 84036 Landshut - Auloh (DE); JANSSEN, Robert, 81475 München (DE); MAURER, Christian, 85659 Karlsdorf/Forstern (DE); SCHREFF, Reinhold, 84103 Postau (DE)
(86) Internationale Anmeldenummer: PCT/EP2013/067428
(87) Internationale Veröffentlichungsnummer: WO 2014/037224

(56) Entgegenhaltungen:
- EP-A1- 2 062 790
- WO-A1-2010/091819
- DE-A1- 10 307 480
- DE-A1- 10 346 012
- US-A1- 2004 041 370

## Beschreibung

Die Erfindung betrifft ein Kraftfahrzeug mit einem Airbagmodul nach dem Oberbegriff des Patentanspruchs 1.

Aus der DE 103 46 012 A1 ist bereits ein Kraftfahrzeug mit einem Airbagmodul bekannt, das wenigstens einen Airbag und wenigstens einen Gasgenerator aufweist, die in einem Airbaggehäuse aufgenommen sind. Das Airbaggehäuse ist mittels wenigstens einer Befestigungseinrichtung an wenigstens einem angrenzenden Wandbereich lösbar befestigbar, wobei die Befestigungseinrichtung als Steck- und Schiebeverbindung nach dem Schlüssellochprinzip ausgebildet ist.

Aufgabe der Erfindung ist es, ein Kraftfahrzeug mit einem Airbagmodul zu schaffen, das auf einfache Weise an einem angrenzenden Wandungsbereich befestigbar ist.

Diese Aufgabe wird mit einem Kraftfahrzeug mit einem Airbagmodul mit den Merkmalen des Patentanspruchs 1 gelöst.

Erfindungsgemäß umfasst ein Airbagmodul eines Kraftfahrzeugs wenigstens einen Airbag und wenigstens einen Gasgenerator, die in einem Airbaggehäuse aufgenommen sind. Dieses Airbagmodul ist mit dem Airbaggehäuse an einem Befestigungsrahmen befestigbar, der mit einer Armaturentafel des Kraftfahrzeugs verbunden ist. Dazu weist das Airbaggehäuse an zumindest zwei gegenüberliegenden Seiten mehrere seitlich nach außen abstehende Zungen auf, wobei die an einer Seite nebeneinander angeordneten Zungen jeweils mindestens eine Zungenbreite zueinander beabstandet sind. Die Zungen erstrecken sich dabei im Wesentlichen in der Ebene des Befestigungsrahmens. Der Befestigungsrahmen weist für die Zungen des Airbaggehäuses entsprechende Hinterschneidungen auf, sodass das befestige Airbagmodul formschlüssig mit den Zungen in den Hinterschneidungen gehalten ist. Dazu kann der Befestigungsrahmen Randabschnitte aufweisen, die sich senkrecht zur Ebene des Befestigungsrahmens erstrecken. Diese Randabschnitte können dann die Hinterschneidungen für die Zungen des Airbaggehäuses aufweisen. Beispielsweise werden die Hinterschneidungen durch Aussparungen in den jeweiligen Randabschnitten gebildet. Je eine Zunge kann dann in einer Aussparung gehalten werden. Bevorzugt ist das Airbaggehäuse zur Befestigung am Befestigungsrahmen in Längsrichtung der beiden einander gegenüberliegenden Seiten mit den Zungen in die Hinterschneidungen einschiebbar. Dabei sind die Zungen und Hinterschneidungen idealerweise so zueinander angeordnet, dass das Airbaggehäuse so am Befestigungsrahmen aufgesetzt werden kann, dass in Längsrichtung gesehen die Zungen jeweils genau zwischen zwei Hinterschneidungen zum Liegen kommen. Dadurch muss zur Befestigung das Airbaggehäuse nur etwa um die Breite einer Zunge in Längsrichtung verschoben werden, um das Airbagmodul formschlüssig am Befestigungsrahmen anzubringen.

Günstigerweise ist das am Befestigungsrahmen befestigte Airbaggehäuse zusätzlich mit zumindest einer Schraube mit dem Befestigungsrahmen verschraubbar. Diese zumindest eine Schraube gewährleistet, dass das in seine formschlüssige Befestigungsposition eingeschobene Airbagmodul sich nicht unerwünschterweise verschieben kann.

Diese Art der Befestigung des Airbagmoduls erfordert sehr wenig Montagezeit. Sie ist prozesssicher und zuverlässig. Es sind keine zusätzlichen Bauteile erforderlich.

Weitere vorteilhafte Ausgestaltungen sind Gegenstand von Unteransprüchen.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise
- Fig. 1: ein Airbagmodul eines Kraftfahrzeugs, das auf einen Befestigungsrahmen aufgesetzt ist, inklusive einer vergrößerten Detailansicht und
- Fig. 2: eine vergrößerte Detailansicht des Airbagmoduls, das formschlüssig vom Befestigungsrahmen gehalten ist.

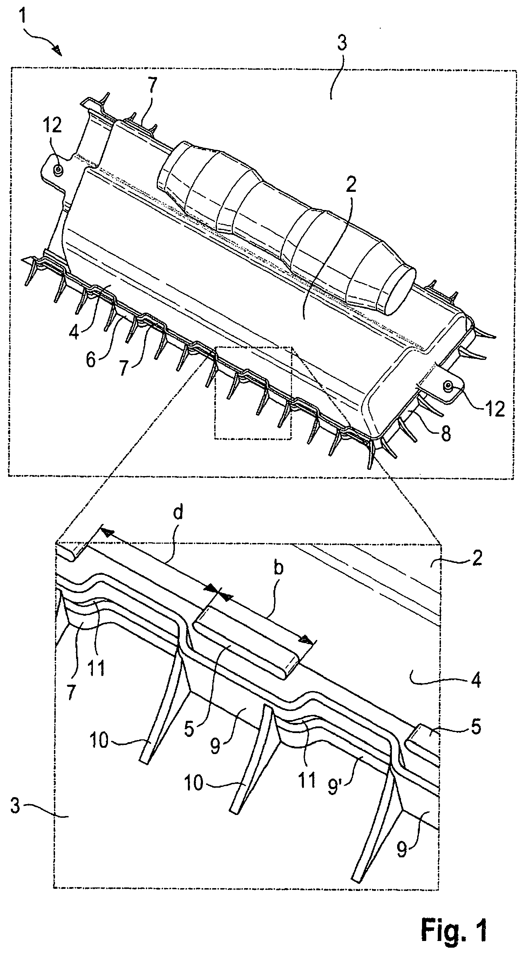

In Fig. 1 ist ein Airbagmodul 1 dargestellt, das aus einem Airbaggehäuse 2 besteht, in dem zumindest ein Airbag und wenigstens ein Gasgenerator untergebracht sind. Der Airbag dient als Beifahrerairbag, der in einer Armaturentafel auf der Beifahrerseite untergebracht ist. Im Falle eines Unfalls kann der Airbag durch einen dem Beifahrer zugewandten Wandungsabschnitt der Armaturentafel hindurchtreten und sich vor dem Beifahrer entfalten. Das Airbagmodul 1 ist über das Airbaggehäuse 2 in der Armaturentafel an dem dem Beifahrer zugewandten Wandungsabschnitt 3 angebracht. Die beim Auslösen des Airbags wirkenden Kräfte sind ziemlich hoch. Entsprechend hoch ist auch die Belastung, die auf die Verbindung zwischen dem Airbaggehäuse 2 und dem Wandungsabschnitt 3 der Armaturentafel wirken.

Das Airbaggehäuse 2 weist eine längliche Form mit zwei zueinander parallel verlaufenden Längsrändern 4 auf. Von diesen einander gegenüberliegenden Längsrändern 4 stehen jeweils mehrere Zungen 5 seitlich nach außen ab. Jeder Längsrand 4 weist entlang seiner Längserstreckung mehrere, in gleichmäßigen Abständen zueinander angeordnete, jeweils gleich breite Zungen 5 auf. Dabei ist der Abstand d zwischen zwei Zungen 5 größer als die Breite b der Zungen 5. Alle Zungen 5 des Airbaggehäuses 2 liegen in einer Ebene.

Zur Aufnahme des Airbaggehäuses 2 ist auf der Innenseite des Wandungsabschnitts 3 ein Befestigungsrahmen 6 angespritzt. Die Passagiere sehen vom Fahrzeuginnenraum aus stets nur die Außenseite des Wandungsabschnitts 3. Der Befestigungsrahmen 6 erstreckt sich ebenfalls in einer Ebene. Er dient sowohl zur Befestigung des Airbaggehäuses 2 als auch zur Erhöhung der Steifigkeit des Wandungsabschnitts 3 der Armaturentafel im Bereich des Beifahrerairbags. Der Befestigungsrahmen 6 besteht aus zwei einander gegenüberliegenden Seitenrändern 7, deren Enden mit einem Querabschnitt 8 miteinander verbunden sind. Die Seitenränder 7 und der Querabschnitt 8 stehen dabei stegartig senkrecht zur Ebene des Befestigungsrahmens vom Wandungsabschnitt 3 der Armaturentafel ab. Die Seitenränder 7 weisen in ihrer Längserstreckung jeweils abwechselnd Randabschnitte 9 auf, die leicht nach innen zur Rahmenmitte hinein versetzt sind, und Randschnitte 9', die leicht nach außen versetzt sind. Die nach innen versetzten Randabschnitte 9 und die nach außen versetzten Randabschnitte 9' sind dabei jeweils miteinander verbunden. Sie wechseln sich labyrinthartig über die Längserstreckung der Seitenränder 7 ab. Zur Erhöhung der Steifigkeit sind zudem die nach außen versetzten Randabschnitte 9' jeweils über zusätzliche zwei Abstützungen 10 mit dem Wandungsabschnitt 3 der Armaturentafel verbunden. Die Länge der nach außen versetzten Randabschnitte 9' ist dabei etwas größer als die Breite b der Zungen 5. Die nach innen versetzten Randabschnitte 9 weisen jeweils einen Längsschlitz 11 auf, der sich über die gesamte Längserstreckung der nach innen versetzten Randabschnitte 9 durchzieht. Die Breite dieser Längsschlitze 11 in den nach innen versetzten Randabschnitten 9 entspricht in etwa der Dicke der Zungen 5.

Der Befestigungsrahmen ist auf das Airbaggehäuse 2 genau abgestimmt. Zur Montage kann - wie in Fig. 1 gezeigt - das Airbaggehäuse 2 auf den Wandungsabschnitt 3 der Armaturentafel so aufgesetzt werden, dass die Zungen 5 der Längsränder 4 des Airbaggehäuses 2 jeweils genau im Bereich der nach außen versetzten Randabschnitte 9' der Seitenränder 7 des Befestigungsrahmens zum Liegen kommen. Der Abstand zwischen den nach innen versetzten Randabschnitten 9 ist zu klein für das Airbaggehäuse 2, hier könnte das Airbaggehäuse 2 nicht auf den Wandungsabschnitt 3 aufgesetzt werden.

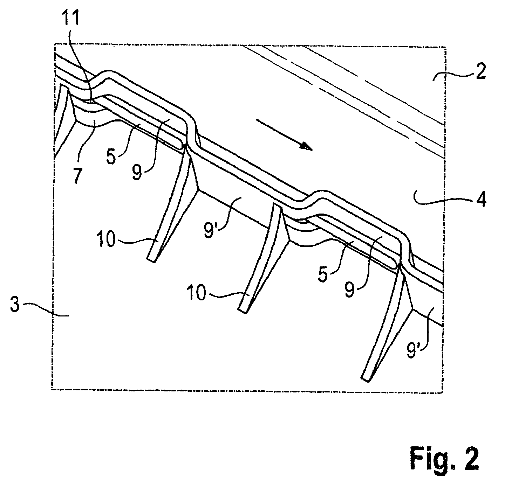

Zur sicheren Befestigung des Airbaggehäuses 2 wird dieses nun aus der in Fig. 1 gezeigten, auf den Wandungsabschnitt 3 aufgesetzten Stellung in Längsrichtung des Airbaggehäuses 2 etwa um die Breite b einer Zunge 5 verschoben. Dabei schieben sich die Zungen 5 in die Längsschlitze 11 der nach innen versetzten Randabschnitten 9 der Seitenränder 7 hinein, wie es in Fig. 2 gezeigt ist. In dieser Stellung ist das Airbaggehäuse 2 formschlüssig über die Zungen 5 in den Längsschlitzen 11 am Befestigungsrahmen und damit am Wandungsabschnitt 3 der Armaturentafel gehalten. Dies stellt eine sehr einfache und robuste Methode zur Befestigung eines Airbagmoduls 1 an einem Wandungsabschnitt 3 dar.

Während der Fahrt des Kraftfahrzeugs könnte sich durch Erschütterungen allerdings das Airbagmodul 1 unerwünschterweise relativ zu dem Befestigungsrahmen verschieben. Um dies zu vermeiden, wird das Airbaggehäuse 2 nach dem Einschieben in die formschlüssige Stellung beidseitig mit jeweils zumindest einer Schraube 12 mit dem Befestigungsrahmen verschraubt, sodass es sich nicht mehr relativ zu diesem verschieben kann.

## Patentansprüche

1. Kraftfahrzeug mit einem Airbagmodul (1), das wenigstens einen Airbag und wenigstens einen Gasgenerator aufweist, die in einem Airbaggehäuse (2) aufgenommen sind, wobei das Airbagmodul (1) mit dem Airbaggehäuse (2) an einem Befestigungsrahmen (6) befestigbar ist, der mit einem Wandungsabschnitt (3) der Armaturentafel verbunden ist, **dadurch gekennzeichnet, dass** das Airbaggehäuse (2) an zumindest zwei gegenüberliegenden Seiten (4) mehrere seitlich nach außen abstehende Zungen (5) aufweist, wobei die an einer Seite (4) nebeneinander angeordneten Zungen (5) jeweils mindestens eine Zungenbreite (b) zueinander beabstandet sind, und dass der Befestigungsrahmen (6) für die Zungen (5) des Airbaggehäuses (2) entsprechende Hinterschneidungen aufweist, sodass das befestigte Airbagmodul (1) formschlüssig mit den Zungen (5) in den Hinterschneidungen gehalten ist.

2. Kraftfahrzeug nach Anspruch 1, **dadurch gekennzeichnet, dass** das Airbaggehäuse (2) zur Befestigung am Befestigungsrahmen (6) in Längsrichtung der beiden einander gegenüberliegenden Seiten (4) mit den Zungen (5) in die Hinterschneidungen einschiebbar ist.

3. Kraftfahrzeug nach Anspruch 1 oder 2, **dadurch gekennzeichnet, dass** alle Zungen (5) in einer Ebene liegen.

4. Kraftfahrzeug nach Anspruch 3, **dadurch gekennzeichnet, dass** der Befestigungsrahmen (6) zumindest zwei einander gegenüberliegende Seitenränder (7) aufweist, die stegartig vom Wandungsabschnitt (3) senkrecht zur Ebene des Befestigungsrahmens (6) abstehen.

5. Kraftfahrzeug nach Anspruch 4, **dadurch gekennzeichnet, dass** die Seitenränder (7) in ihrer Längserstreckung jeweils abwechselnd Randabschnitte (9) aufweisen, die leicht nach innen zur Mitte des Befestigungsrahmens (6) versetzt sind, und Randabschnitte (9'), die leicht nach außen versetzt sind.

6. Kraftfahrzeug nach Anspruch 5, **dadurch gekennzeichnet, dass** die leicht nach innen versetzten Randabschnitte (9) jeweils einen Längsschlitz (11) aufweisen, der eine Hinterschneidung für eine Zunge (5) bildet.

7. Kraftfahrzeug nach Anspruch 6, **dadurch gekennzeichnet, dass** die Breite des Längsschlitzes (11) der Dicke der Zungen (5) entspricht.

8. Kraftfahrzeug nach Anspruch 7, **dadurch gekennzeichnet, dass** jeweils die Längserstreckung der nach außen versetzten Randabschnitte (9') größer als die Breite (b) einer Zunge (5) ist.

9. Kraftfahrzeug nach einem der vorhergehenden Ansprüche, **dadurch gekennzeichnet, dass** das am Befestigungsrahmen (6) formschlüssig befestigte Airbaggehäuse (2) zusätzlich mit zumindest einer Schraube (12) mit dem Befestigungsrahmen (6) verschraubbar ist.

## Claims

1. A motor vehicle with an airbag module (1) which has at least one airbag and at least one gas generator which are accommodated in an airbag housing (2), it being possible for the airbag module (1) to be attached by the airbag housing (2) to a fastening frame (6) which is connected to a wall portion (3) of the dashboard, **characterised in that** the airbag housing (2) has on at least two opposite sides (4) a plurality of laterally outwardly projecting tongues (5), the tongues (5), arranged next to one another on one side (4), being spaced apart in each case by at least one tongue width (b), and **in that** the fastening frame (6) has corresponding undercuts for the tongues (5) of the airbag housing (2), so that the attached airbag module (1) is held positively by the tongues (5) in the undercuts.

2. A motor vehicle according to claim 1, **characterised in that** the airbag housing (2) can be pushed into the undercuts by the tongues (5) in the longitudinal direction of the two mutually opposite sides (4) for attachment to the fastening frame (6).

3. A motor vehicle according to claim 1 or claim 2, **characterised in that** all the tongues (5) are located in one plane.

4. A motor vehicle according to claim 3, **characterised in that** the fastening frame (6) has at least two mutually opposite side edges (7) which project in a web-like manner from the wall portion (3) vertically to the plane of the fastening frame (6).

5. A motor vehicle according to claim 4, **characterised in that** the side edges (7) have in their longitudinal extent respectively alternating edge portions (9) which are offset slightly inwards towards the centre of the fastening frame (6), and edge portions (9') which are offset slightly outwards.

6. A motor vehicle according to claim 5, **characterised in that** the slightly inwardly offset edge portions (9) have a longitudinal slot (11) in each case which forms an undercut for a tongue (5).

7. A motor vehicle according to claim 6, **characterised in that** the width of the longitudinal slot (11) corresponds to the thickness of the tongues (5).

8. A motor vehicle according to claim 7, **characterised in that** the longitudinal extent of the outwardly offset edge portions (9') is greater in each case than the width (b) of a tongue (5).

9. A motor vehicle according to any one of the preceding claims, **characterised in that** the airbag housing (2) which is attached positively to the fastening frame (6) can also be screwed to the fastening frame (6) by at least one screw (12).

## Revendications

1. Véhicule équipé d'un module d'airbag (1) comprenant au moins un airbag et au moins un générateur de gaz qui sont logés dans un boîtier d'airbag (2), le module d'airbag (1) pouvant être fixé avec le boîtier d'airbag (2) sur un cadre de fixation (6) qui est relié à un segment de paroi (3) du tableau de bord,
**caractérisé en ce que**
le boîtier d'airbag (2) comprend, sur au moins deux côtés opposés (4) plusieurs languettes latérales (5) s'écartant vers l'extérieur, les languettes (5) disposées côte à côte sur un côté (4) étant respectivement distantes les unes des autres d'au moins la largeur d'une languette (b), et le cadre de fixation (6) comprend pour les languettes (5) du boîtier d'airbag (2) des contre-dépouilles correspondantes de sorte que le module d'airbag (1) fixé soit maintenu par une liaison par la forme avec les languettes (5) dans les contre-dépouilles.

2. Véhicule conforme à la revendication 1,
**caractérisé en ce que**
pour permettre sa fixation sur le cadre de fixation (6), le boîtier d'airbag (2) peut être introduit par coulissement, dans la direction longitudinale des côtés (4) opposés l'un à l'autre, avec les languettes (5) dans les contre-dépouilles.

3. Véhicule conforme à la revendication 1 ou 2,
**caractérisé en ce que**
toutes les languettes (5) sont situées dans un plan.

4. Véhicule conforme à la revendication 3,
**caractérisé en ce que**
le cadre de fixation (6) comprend au moins deux bords latéraux opposés (7) qui s'écartent à la manière de barrettes du segment de paroi (3) perpendiculairement au plan de ce cadre de fixation (6).

5. Véhicule conforme à la revendication 4,
**caractérisé en ce que**
les bords latéraux (7) comportent, chacun alternativement, dans leur extension longitudinale, des segments de bord (9) qui sont un peu décalés vers l'intérieur par rapport au milieu du cadre de fixation (6) et des segments de bord (9') qui sont un peu décalés vers l'extérieur.

6. Véhicule conforme à la revendication 5,
**caractérisé en ce que**
les segments de bord (9) un peu décalés vers l'intérieur comportent chacun une fente longitudinale (11) qui forme une contre-dépouille pour une languette (5).

7. Véhicule conforme à la revendication 6,
**caractérisé en ce que**
la largeur de la fente longitudinale (11) correspond à l'épaisseur des languettes (5).

8. Véhicule conforme à la revendication 7,
**caractérisé en ce que**
l'extension longitudinale respective des segments de bords (9') décalés vers l'extérieur est supérieure à la largeur (b) d'une languette (5).

9. Véhicule conforme à l'une des revendications précédentes,
**caractérisé en ce que**
le boîtier d'airbag (2) fixé par une liaison par la forme sur le cadre de fixation (6) peut en outre être vissé sur ce cadre de fixation (6) avec au moins une vis (12).
